# EUROPEAN PATENT APPLICATION

(11) **EP 4 542 525 A1**
(43) Date of publication of application: **23.04.2025**
(21) Application number: 23204395.0
(22) Date of filing: 18.10.2023
(51) Int. Cl.: G08G 1/16, G01S 13/931

(54) **METHOD FOR MANEUVERING AN AT LEAST PARTIALLY AUTONOMOUS VEHICLE AT A JUNCTION**

(71) Applicant: Volvo Car Corporation, 405 31 Göteborg (SE)
(72) Inventor: YANG, Derong, 40531 Göteborg (SE); FEI, Zhennan, 40531 Göteborg (SE)
(74) Representative: Maiwald GmbH

(57) **Abstract**

The disclosure relates to a method (100) for maneuvering an at least partially autonomous vehicle (10) from a first road (31) positioned at a junction (30) into a second road (32) meeting the first road (31) at the junction (30), the method (100) comprising:
- observing a first area (1) of the second road (32) for detection of road users (20) by a detection system (13) of the vehicle (10),
- altering a detection area of the detection system (13) to include a second area (2) of the second road (32), the second area (2) comprising a further area (3) of the second road (32) that is not comprised in the first area (31),
- observing the second area (2) of the second road (32) for detection of road users (20) by the detection system (13), and
- maneuvering the vehicle (10) into the second road (32) based on the observing of the second area (2) of the second road (32).

## Description

### TECHNICAL FIELD

The present disclosure relates to a method for maneuvering an at least partially autonomous vehicle from a first road positioned at a junction into a second road meeting the first road at the junction, a vehicle, and a computer program product.

### BACKGROUND ART

Merging of vehicles at junctions, in particular at unsignalized junctions with obstructed view, is a challenge for drivers and autonomous vehicles. Vehicles on the main road of the junction struggle to detect vehicles merging into the main road in time, while for those vehicles which are attempting to merge into the main road, assessing traffic conditions on the main road proves to be difficult.

### SUMMARY

The above problem is at least partially solved or alleviated by the subject matter of the independent claims of the present disclosure, wherein further examples are incorporated in the dependent claims.

According to a first aspect, there is provided a method for maneuvering an at least partially autonomous vehicle from a first road positioned at a junction into a second road meeting the first road at the junction, the method comprising:
- observing a first area of the second road for detection of road users by a detection system of the vehicle,
- altering a detection area of the detection system to include a second area of the second road, the second area comprising a further area of the second road that is not comprised in the first area,
- observing the second area of the second road for detection of road users by the detection system, and
- maneuvering the vehicle into the second road based on the observing of the second area of the second road.

The method of the first aspect is based on the finding that one of the main reasons for the above problem lies in a limited field of view of in-vehicle equipped sensors such as but not limited to, for example, camera, radar and/or lidar, in combination with the trajectories planned and followed by the merging vehicle when merging into the second road, which may be a main road. To increase this critical field of view, the method of the first aspect provides for an altering of the detection area of the second road or main road such that a second area is observed on the second road for detection of road users thereon, which includes a further area that was not visible when the first area of the second road was observed. Accordingly, when taking the observation of the first area and the second area together, the overall field of view can be increased, thus enabling the at least partially autonomous vehicle to perform the maneuvering of the vehicle based on more information about the traffic on the main road and thereby in a safer manner.

The junction may be an unsignalized junction. This means that there are no traffic lights at the unsignalized junction to guide the traffic. The junction may be a T-junction. This means that the first road ends at the second road. The junction may provide only an obstructed view for the vehicle when positioned at the junction and aiming to maneuver into the second road. Objects such as walls, trees, houses and similar may be obstructing the view in such a case, for example. Any one or any combination of the afore-mentioned types of junctions may be present. The vehicle may be configured to detect, in particular by its detection system, the type of junction and alter the detection area based on the detected type of junction.

The altering of the detection area by, e.g., rotating the vehicle, will be described exemplary further below in more detail. In general, the detection area of the detection system may be limited and not include the entirety of the second road, e.g., because of difficult conditions such as nighttime, when the junction has obstructed view or when the vehicle has a detection system which may not overlook the entire second road at once. The second area may fully comprise the first area. Accordingly, the second area may be an increased detection area compared to the first area. However, this must not be necessarily the case. Instead, the second area may be a shifted detection area, which may not or only partially comprise the first area. In this case, a part of the first area may still be observed but the area of detection has been shifted to the further area.

Any of the observing steps may be carried out for a moment or a period of time, e.g., a few seconds, for example. Accordingly, the detection system may momentarily or for a period of time observe the first area and/or the second area such that it may detect road users on the second road at that moment or within that period of time. The detection of road users based on the observing of the second area may include determining their position on the second road, absolute or relative to the vehicle, their direction of travel, their speed and/or their acceleration, for example.

The vehicle is at least partially autonomous. This means that the vehicle may be capable of partial or fully autonomous driving. Partial autonomous driving relates to one or more driving assistance functions such as, but not limited to, cruise control, lane keeping assistant, and distance control assistant, for example. The maneuvering of the vehicle may be carried out at least partially or fully autonomous. In other words, the maneuvering of the vehicle into the second road based on the observing of the second area of the second road may be performed at least autonomously by the vehicle. The maneuvering of the vehicle does not need to be based on the observing of the second area of the second road only but may further be based on the observing of the first area, a third area as described further below and/or further information, which may be from a V2X communication with one or more entities, e.g., the road users on the second road, for example.

In an example, the observing of the second area of the second road may comprise detecting at least one road user in the further area of the second road by the detection system. Accordingly, the detection area may be increased or shifted by including the further area such that at least one road user is detected therein. Without the increased or shifted detection area, such at least one road user may not be detectable and lead to a potentially dangerous maneuvering of the vehicle into the second road when the trajectory of the vehicle maneuvering crosses the trajectory of the at least one road user in the further area.

In an example, the method may comprise detecting the at least one road user in the further area of the second road prior to altering the detection area, the detection of the at least one road user being based on an audio recording, by an audio recording system of the vehicle, of sound from the at least one road user in the further area of the second road. Accordingly, the at least one road user in the further area may first be coarsely localized based on its sound, e.g., road sounds or engine sounds. For detecting the position or location of the road user, the recorded audio may be processed to determine the coarse location from which the sound originates. Also, if the audio recording contains different sounds and/or sounds from different locations, the different sounds may be discriminated from one another by such audio processing. Then, for the detection system to detect the at least one road user localized based on its sound, the detection area is altered such that it includes the further area in which it was localized based on its sound. Accordingly, based on the sound detection, the vehicle may know which area of the second road it needs to observe given a potentially limited detection area.

In an example, the method may comprise:
- altering the detection area of the detection system to include a third area of the second road, the third area comprising another area of the second road that is not comprised in the first area and second area, and
- observing the third area of the second road for detection of road users by the detection system,
the maneuvering of the vehicle into the second road being further based on the observing of the third area of the second road. Accordingly, there may be more than one step of altering the detection area. For example, the altering of the detection area may mimic the human behavior of looking left and right at junctions due to the eyes limited field of view. Thereby, different areas of the second road may be observed and road users in any of these users may be detected and their thereby determined position, direction of travel and/or speed may be considered when maneuvering the vehicle.

In an example, the method may comprise rotating the vehicle at the junction for altering the detection area. The rotation of the vehicle may be provided by turning the wheels and/or driving forward or backward. The rotation of the entire vehicle for altering the detection area is merely one example. Other examples as described herein may be provided in addition or alternatively to the rotation of the entire vehicle.

In an example, the method may comprise rotating at least one detection unit of the detection system for altering the detection area. Accordingly, the detection system itself with its one or more detection units, may be rotated so as to increase or shift the detection area. For the rotation of the at least one detection unit, the detection system may comprise one or more actuators for rotating the one or more detection units separately or together.

In an example, the at least one rotated detection unit is at least one from a camera detection unit, a LiDAR detection unit, and a radar detection unit. This includes that the detection unit is any one of the afore-mentioned or any combination of two or more of the afore-mentioned detection units.

In an example, the altering of the detection area may comprise increasing at least one of an illumination intensity, an illumination direction, and an illumination area of a vehicle lighting system of the vehicle. The vehicle lighting of the vehicle light system may in particular be an exterior vehicle lighting and include but not be limited to headlights and/or high beams of the vehicle, for example. By increasing the illumination intensity at the junction, the detection area may be increased so that the further area may be included. Also, or alternatively, the direction of illumination may be shifted to shift the detection area, e.g., by rotating the entire vehicle or one or more vehicle lighting units, e.g., the headlights, of the vehicle. Additionally, or alternatively, the illumination area of the detection area may generally be increased or decreased, e.g., by switching modes of the vehicle lighting. For example, it may be switched between a mode in which the headlights are activated and a mode in which the high beams are activated additionally or instead.

In an example, at least one of the illumination intensity and the illumination area of the vehicle lighting system may be increased by operating a high beam lighting system of the vehicle lighting system of the vehicle. While it may not generally be feasible to always operate the high beam lighting system at night due to the potential of distracting other road users, it may be used for a short period of time to alter the detection area and thereby detect road users in the further area, ultimately increasing the traffic safety by preventing collisions at junction.

In an example, the illumination intensity of the vehicle lighting system may be increased based on an ambient light measurement of an ambient light sensor system of the vehicle. Accordingly, the illumination intensity, e.g., of the high beam lighting system, may be selected such that it is increased only as much as needed to detect the second area and without significantly distracting the road users in the second area.

In an example, the method may comprise initiating a signaling or increasing an amount of signaling of the vehicle to road users on the second road before and/or upon maneuvering the vehicle into the second road relative to a nominal signaling value. The nominal signaling value may be a normal value indicative of an amount of signaling during normal operation of the vehicle at the junction, i.e., without having the amount of signaling increased. The signaling may relate to a sound, light and/or any other signal emitted from the vehicle, for example.

In an example, the amount of signaling may be a volume of a sound, the sound being emitted from the vehicle. This provides for a simple yet efficient way of making road users on the second road aware of the vehicle positioned at the junction and aiming to maneuver into the second road, thereby increasing traffic safety.

In an example, the emitted sound may be an engine sound, the sound being emitted from an engine sound simulation unit for simulating an engine sound of the vehicle. For example, the vehicle may be an electric vehicle. Accordingly, even though the road sounds emitted from the vehicle, in particular electric vehicle, are less compared to internal combustion engine vehicles, the engine sound simulation unit may be activated to initiate the signaling or increase the amount of signaling such that road users on the second road may still be made aware of the vehicle positioned at the junction and aiming to maneuver into the second road.

According to a second aspect, there is provided a vehicle comprising means configured to execute the method of the first aspect of this disclosure. Such means may include the detection system for observing the first area and the second area and computer means, e.g., a microprocessor or computer. Such computer means or further computer means may also be configured to maneuver the vehicle at least partially autonomously into the second road. Further, the vehicle may comprise means for altering the detection area, which may be the computer means as mentioned above and which may be configured to rotate the vehicle in its entirety, or, alternatively or additionally, means, such as an actuator, to rotate the at least one detection unit of the detection system, the high beam lighting system and/or the engine sound simulation unit, for example.

According to a third aspect, there is provided a computer program product comprising instructions to cause a vehicle to execute the method of the first aspect of this disclosure. The computer program product may be a computer program as such or a product, e.g., a computer readable storage medium, having stored thereon the instructions.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows steps of a method according to an example of this disclosure;
- Figure 2: shows a vehicle according to an example of this disclosure; and
- Figures 3-5: show a junction with the vehicle of Fig 2, in which the vehicle carries out different steps of the method of Fig. 1.

### DETAILED DESCRIPTION

The Figures are merely schematic representations and serve only to illustrate examples of the disclosure. Identical or equivalent elements are in principle provided with the same reference signs.

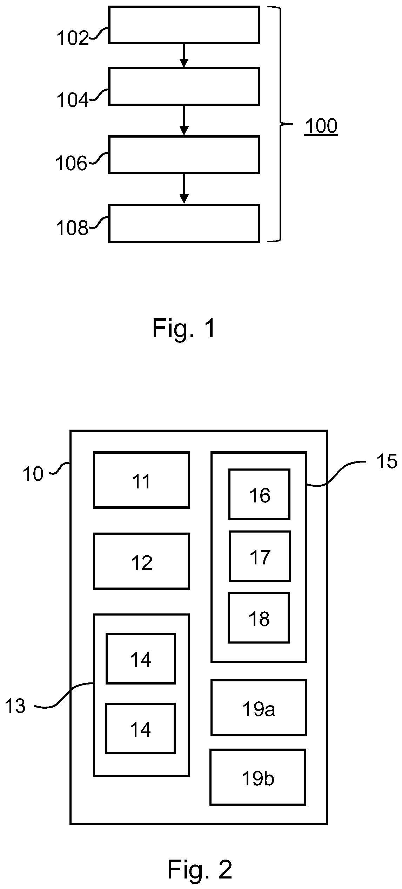

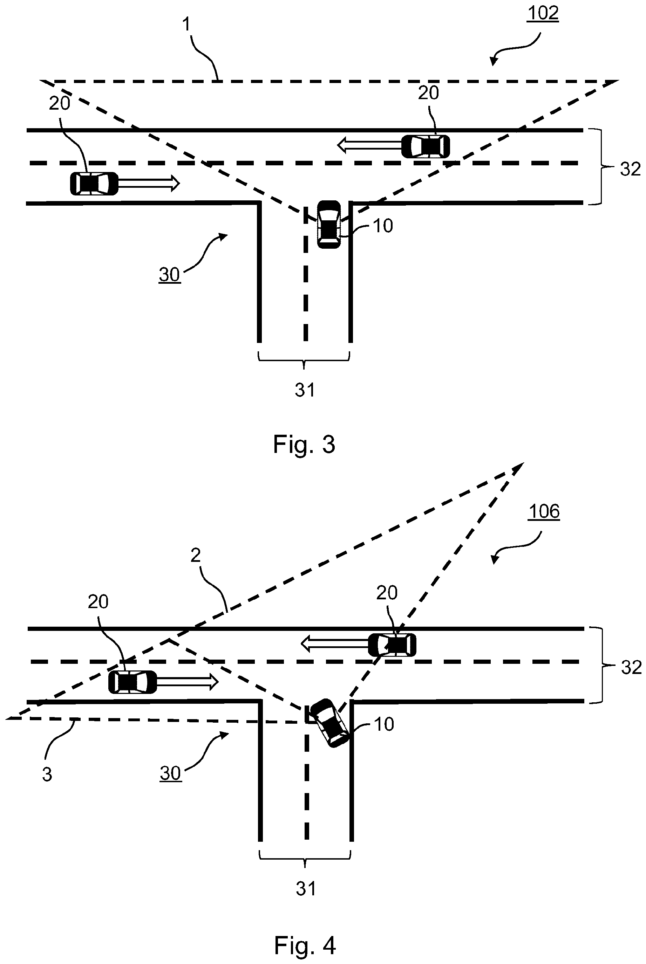

Figure 1 shows a method 100 for maneuvering an at least partially autonomous vehicle 10 (see Figs. 2 to 5) from a first road 31 positioned at a junction 30 into a second road 32 meeting the first road 31 at the junction 30 (see Figs. 3 to 5). The junction 30 in Figs. 3 to 5 is exemplary shown as an unsignalized T-junction.

Figure 2 shows the vehicle 10 in a schematic manner with its components. The vehicle 10 may be at least partially autonomous and/or an electric vehicle. The vehicle 10 comprises a computer 11 and a computer program product 12. The computer program product 12 comprises instructions executable by the computer 11 such that the method 100 is being carried out.

The vehicle 10 further comprises a detection system 13 comprise one or more detection units 14, such as a camera detection unit, a LiDAR detection unit, and a radar detection unit, for example. Further, the vehicle 10 may comprise a vehicle lighting system 15, which may comprise a headlight lighting system 16, a high beam lighting system 17 and an ambient light sensor system 18. Moreover, the vehicle 10 may comprise an engine sound simulation unit 19a and/or an audio recording system 19b.

In step 102 of method 100, as illustrated exemplary in Fig. 3, the detection system 13 observes a first area 1 of the second road 32 such that it may detect road users 20 thereon. The first area 1 may be defined in size by a detection area of the detection system 13 in terms of its capabilities. In the example of Fig. 3, the detection system 13 may detect the road user 20 in form of a further vehicle to the right of the vehicle 10. For example, the detection system 13 by means of its at least one detection unit 14 may be capable of detecting the position, speed, travel direction, etc. of the road user 20. However, in this exemplary case, the vehicle 10 is not able to see the road user 20 in form of a further vehicle to the left of the vehicle 10 because the left road user 20 is outside of the first area 1. This may lead to a potentially dangerous situation when the at least partially autonomously maneuvered vehicle 10 is to make a left or right turn at the junction 30 based on the observation of the detection system 13.

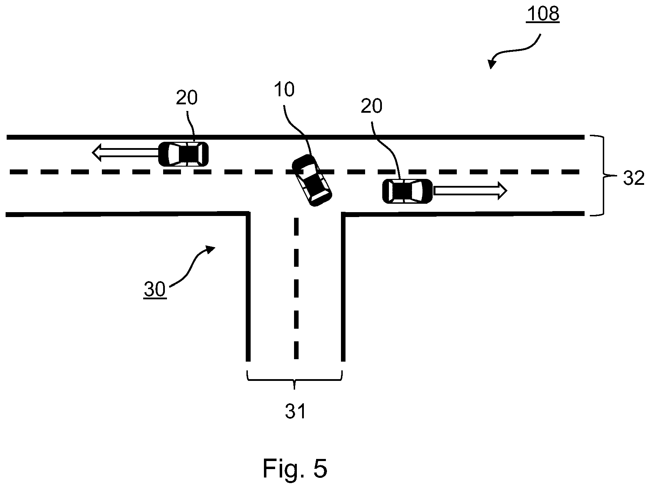

To avoid such potentially dangerous situations, method 100 comprises a step 104, in which the detection area of the detection system 13 is altered to include a second area 2 of the second road 32 as exemplary shown in Fig. 4. The second area 2 comprises a further area 3 of the second road 32 that is not comprised in the first area 31. Thereby, in step 106 of method 100, the detection system 13 may observe the second area 2 of the second road 32 for detection of road users 20. As may be taken from the example of Fig. 4, the vehicle 10 is now able to detect the left road user 20 in the further area 3 such that the at least partially autonomous vehicle 10 is aware of the left road user 20 and takes it into consideration when maneuvering the vehicle 10 into the second road 30, which corresponds to step 108 of method 100 as exemplary illustrated in Fig. 5.

Before observing the further area 3 by the detection system 13, the method 100 may further include detecting the left road user 20 in the further area 3 of the second road 32 based on an audio recording by the audio recording system 19b, the audio recording including the sound from the left road user 20. For the detection of the road user 20 to the left in the example of Figs. 3 and 4, the recorded audio may be audio processed to detect the direction of the recorded sounds such that it may be estimated where the sound originates from, i.e., where a road user 20 emitting the sound is coarsely located on the second road 32. Accordingly, a visual-based detection area of the detection system 13 may be altered based on a prior audio-based detection of one or more road users 20 rather than altering the detection area at random.

The altering of the detection area of the detection system 13 is shown in Fig. 4 exemplary as a rotation of the entire vehicle 10. However, alternatively, or additionally, the detection area may be altered by rotating at least one the detection units 14, by increasing at least one of an illumination intensity, an illumination direction, and an illumination area of a vehicle lighting system 15 of the vehicle 10, e.g., by operating a high beam lighting system 17 thereof in addition or alternatively to the headlight lighting system 16, and/or by initiating a signaling of the vehicle 10 to road users 20 on the second road 32, e.g., by operating the engine sound simulation unit 19a. The variant of the lighting altering may be based on an ambient light measurement of the ambient light sensor system 18. An advantage of the increased illumination and/or sound is that the road users 20 on the second road 32 may be made aware of the vehicle 10 and thereby increase safety.

Further, steps 104 and 106 may be repeated such that other areas are included, which are not visible in the first area 1 or second area 2. Moreover, further steps of the method 100 may be employed which relate to the positioning of the vehicle 10 at the junction 30. In particular, the method 100 may comprise nudging of the vehicle 10 into the second road 32 before maneuvering the vehicle 10 into the second road 32. This may further increase the detection area of the detection system 13. If the vehicle 10 is nudged into the second road 32, the vehicle 10 may also pull back, if needed, e.g., if a road user 20 is coming close to the vehicle 10 and there would otherwise be a risk of an accident. The amount of nudging of the vehicle 10 into the second road 32 may be determined by a machine learning model, which may be utilized by the computer 11, for example. Further, the method 100 may comprise performing a risk assessment for maneuvering the vehicle 10 into the second road 32. The risk assessment may consider any detected road users 20 during observation of the first area, the second area and/or any further area of the second road 32. Accordingly, based on the risk assessment, the maneuvering of the vehicle 10 into the second road 32 may be timed such that it is performed when the risk is the lowest or lower than a threshold.

As used herein, the phrase "at least one," in reference to a list of one or more entities should be understood to mean at least one entity selected from any one or more of the entities in the list of entities, but not necessarily including at least one of every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a nonlimiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. A computer program product may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 1: first area
- 2: second area
- 3: further area
- 10: vehicle
- 11: computer
- 12: computer program product
- 13: detection system
- 14: detection unit
- 15: vehicle lighting system
- 16: headlight lighting system
- 17: high beam lighting system
- 18: ambient light sensor system
- 19a: engine sound simulation unit
- 19b: audio recording system
- 20: road user
- 30: junction
- 31: first road
- 32: second road
- 100: method
- 102-108: steps

## Claims

1. A method (100) for maneuvering an at least partially autonomous vehicle (10) from a first road (31) positioned at a junction (30) into a second road (32) meeting the first road (31) at the junction (30), the method (100) comprising:
- observing a first area (1) of the second road (32) for detection of road users (20) by a detection system (13) of the vehicle (10),
- altering a detection area of the detection system (13) to include a second area (2) of the second road (32), the second area (2) comprising a further area (3) of the second road (32) that is not comprised in the first area (31),
- observing the second area (2) of the second road (32) for detection of road users (20) by the detection system (13), and
- maneuvering the vehicle (10) into the second road (32) based on the observing of the second area (2) of the second road (32).

2. The method (100) of claim 1, the observing of the second area (2) of the second road (32) comprising detecting at least one road user (30) in the further area (3) of the second road (32) by the detection system (13).

3. The method (100) of claim 2, the method (100) comprising detecting the at least one road user (20) in the further area (3) of the second road (32) prior to altering the detection area, the detection of the at least one road user (20) being based on an audio recording, by an audio recording system (19b) of the vehicle (10), of sound from the at least one road user (20) in the further area (3) of the second road (32).

4. The method (100) of any one of the previous claims, the method (100) comprising:
- altering the detection area of the detection system (13) to include a third area of the second road (32), the third area comprising another area of the second road (32) that is not comprised in the first area (1) and second area (2), and
- observing the third area of the second road (32) for detection of road users (20) by the detection system (13),
the maneuvering of the vehicle (10) into the second road (32) being further based on the observing of the third area of the second road (32).

5. The method (100) of any one of the previous claims, the method (100) comprising rotating the vehicle (10) at the junction (30) for altering the detection area.

6. The method (100) of any one of the previous claims, the method (100) comprising rotating at least one detection unit (14) of the detection system (13) for altering the detection area.

7. The method (100) of claim 6, the at least one rotated detection unit (14) being at least one from a camera detection unit, a LiDAR detection unit, and a radar detection unit.

8. The method (100) of any one of the previous claims, the altering of the detection area comprising increasing at least one of an illumination intensity, an illumination direction, and an illumination area of a vehicle lighting system (15) of the vehicle (10).

9. The method of claim 8, at least one of the illumination intensity and the illumination area of the vehicle lighting system (15) being increased by operating a high beam lighting system (17) of the vehicle lighting system (15) of the vehicle (10).

10. The method (100) of claim 8 or 9, the illumination intensity of the vehicle lighting system (15) being increased based on an ambient light measurement of an ambient light sensor system (18) of the vehicle (10).

11. The method (100) of any one of the previous claims, the method (100) comprising initiating a signaling or increasing an amount of signaling of the vehicle (10) to road users (20) on the second road (32) before and/or upon maneuvering the vehicle (10) into the second road (32) relative to a nominal signaling value.

12. The method (100) of claim 11, the amount of signaling being a volume of a sound, the sound being emitted from the vehicle (10).

13. The method (100) of claim 12, the emitted sound being an engine sound, the sound being emitted from an engine sound simulation unit (19a) for simulating an engine sound of the vehicle (10).

14. A vehicle (10) comprising means configured to execute the method (100) of any one of the previous claims.

15. A computer program product (12) comprising instructions to cause a vehicle (10) to execute the method (100) of any one of claims 1 to 13.
